# EUROPEAN PATENT SPECIFICATION

(11) **EP 4 296 559 B1**
(45) Date of publication and mention of the grant of the patent: **22.10.2025**
(21) Application number: 22210867.2
(22) Date of filing: 01.12.2022
(51) Int. Cl.: F17C 1/12, F17C 3/04

(54) **LARGE-SCALE CEILING STRUCTURED LOW-PRESSURE LIQUID HYDROGEN CONCRETE STORAGE TANK**
IN DER DECKE STRUKTURIERTER NIEDERDRUCK-FLÜSSIGWASSERSTOFF-BETONSPEICHERTANK
RÉSERVOIR DE STOCKAGE DE BÉTON LIQUIDE À BASSE PRESSION STRUCTURÉ AU PLAFOND À GRANDE ÉCHELLE

(30) Priority: 24.06.2022 CN 202210726232
(43) Date of publication of application: 27.12.2023
(73) Proprietor: Cnooc Gas & Power Group, Beijing 100028 (CN)
(72) Inventor: ZHANG, Chao, Beijing, 100028 (CN); YANG, Fan, Beijing, 100028 (CN); XIAO, Li, Beijing, 100028 (CN); PENG, Yanjian, Beijing, 100028 (CN); JI, Ningning, Beijing, 100028 (CN); LI, Yuhang, Beijing, 100028 (CN); ZHANG, Bochao, Beijing, 100028 (CN); XIA, Mengying, Beijing, 100028 (CN); HUANG, Huan, Beijing, 100028 (CN); CHEN, Tuanhai, Beijing, 100028 (CN); ZHAO, Mingrui, Beijing, 100028 (CN); LIU, Yang, Beijing, 100028 (CN); ZHONG, Xi, Beijing, 100028 (CN); LI, Anqi, Beijing, 100028 (CN)
(74) Representative: Isarpatent

(56) References cited:
- CN-A- 104 806 873
- CN-A- 114 263 845
- CN-A- 114 458 941
- CN-U- 204 042 414
- CN-U- 216 667 249

## Description

### FIELD OF THE INVENTION

The present disclosure relates to the technical field of liquid hydrogen storage container equipment, in particular to a large-scale ceiling structured low-pressure liquid hydrogen concrete storage tank.

### BACKGROUND OF THE INVENTION

Energy has always been an eternal topic in development of human beings, and also a crucial strategic resource for national development. Taking into account those new energy sources currently available, a consensus has been reached by the whole world that hydrogen energy is the best as substitute for fossil fuels. With rapid development and industrialization of hydrogen fuel cells and electric vehicles, the research and construction on hydrogen source technology and hydrogen energy infrastructure have attracted great attention from various countries. The development momentum of the hydrogen energy industry keeps booming, and hydrogen energy has reached a critical period of development, which ever as the past "future energy" is now gradually catering to large-scale application.

The key that restricts practicability and scalization of hydrogen energy to be as the ideal new energy source is storage of hydrogen. At present, hydrogen storage technologies that have received widespread concern mainly include high-pressure hydrogen storage, metal hydride hydrogen storage, and cryogenic liquid hydrogen storage. The cryogenic liquid hydrogen storage technology has the absolute advantage of high hydrogen storage density per unit mass and unit volume. The liquid hydrogen storage refers to cryogenically cooling hydrogen gas subjected to compression to below 21K to liquefy it into liquid hydrogen, and then storing it in a special adiabatic vacuum container for storage. As the density of liquid hydrogen is 70.78kg/m³, which is nearly 850 times the density of hydrogen gas under standard condition 0.08342kg/m³, even if hydrogen gas was compressed to 15MPa, or even 35 MPa, 70MPa, its storage capacity per unit volume is not comparable to that of liquid storage. From the perspective of energy storage density alone, the cryogenic liquid hydrogen storage is a very ideal approach.

However, the cryogenic liquid storage technology in China has been still in a lagging stage so far, so that none of cryogenic liquid storage devices can cryogenically store liquid hydrogen on a large scale.

CN 204 042 414U discloses a 16*10⁴m³ concrete full-capacity storage tank, which comprises an inner tank and an outer tank, wherein the inner tank comprises an inner tank bottom, a secondary bottom plate, an inner tank wall, an inner tank anchoring belt, a hot corner protection device and an inner tank wall reinforcing ring; and the outer tank comprises an outer tank bottom, an outer tank wall, a ceiling, a tank top, an outer lining plate, a tank top pipe connection accessory and an arch crown steel structure.

### SUMMARY OF THE INVENTION

In view of the above problems, an objective of the present disclosure is to provide a large-scale ceiling structured low-pressure liquid hydrogen concrete storage tank, which can solve the problem of cryogenically storing liquid hydrogen on large scale, ensure safe and smooth operation of liquid hydrogen cryogenic storage equipment by means of an airtight system of the equipment.

In order to achieve the above objective, the present disclosure adopts the following technical solutions:
The large-scale ceiling structured low-pressure liquid hydrogen concrete storage tank according to the present disclosure comprises: pile foundation fixed to the ground, wherein a cushion cap is provided at an upper part of the pile foundation; an tank bottom cold insulation layer provided at a top of the cushion cap in a stacked manner; a storage tank body with a bottom thereof fixed to the tank bottom cold insulation layer, wherein inside of the storage tank body there is a cavity for storing liquid hydrogen, and the storage tank body includes a prestressed concrete outer tank, a perlite layer, an elastic felt layer, and an inner tank which are arranged in turn from outside to inside; a metal ceiling provided at a top of the storage tank body, wherein an outer edge of the metal ceiling is connected to the perlite layer of the storage tank body; a prestressed concrete dome provided at a top of the metal ceiling, wherein an outer edge of the dome is fixed to a top of the prestressed concrete outer tank of the storage tank body; wherein the pile foundation, the prestressed concrete outer tank of the storage tank body, and the prestressed concrete dome each are prefabricated prestressed steel bars therein.

In the large-scale ceiling structured low-pressure liquid hydrogen concrete storage tank, a stretchable corrugated structure ceiling is provided between the edge of the metal ceiling and the perlite layer, and part of perlite is filled on the stretchable corrugated structure ceiling and provided within an annular space of the perlite layer as a part of the perlite layer.

In the large-scale ceiling structured low-pressure liquid hydrogen concrete storage tank, preferably, a perlite baffle is provided at connection between the metal ceiling and the perlite layer.

In the large-scale ceiling structured low-pressure liquid hydrogen concrete storage tank, preferably, a ceiling glass wool insulation layer is provided at an upper part of the metal ceiling; and the metal ceiling is provided with a ceiling vent.

In the large-scale ceiling structured low-pressure liquid hydrogen concrete storage tank, preferably, a dome lining plate is provided at a bottom of the prestressed concrete dome; the prestressed concrete dome is provided on one side with a perlite filling port, which penetrates the prestressed concrete dome and then extends into an upper part of an annular space of the perlite layer of the storage tank body.

The large-scale ceiling structured low-pressure liquid hydrogen concrete storage tank, preferably, further comprises a feeding system for feeding the storage tank body; the feeding system includes a feeding pipe, a first feeding pipeline and a second feeding pipeline; the feeding pipe is arranged inside the storage tank body, and a bottom of the feeding pipe is fixed to a bottom of the inner tank; raw material is communicated to the feeding pipe through the first feeding pipeline; raw material is communicated to the internal cavity of the storage tank body through the second feeding pipeline; and the first feed pipeline and the second feeding pipeline are provided with first valves, respectively.

The large-scale ceiling structured low-pressure liquid hydrogen concrete storage tank, preferably, further comprises an outward pumping system for transporting internal liquid hydrogen to outside of the storage tank body; the outward pumping system includes a pump well, a liquid hydrogen transfer pump and a first output pipeline; the pump well is arranged within the storage tank body, the liquid hydrogen transfer pump is arranged within the pump well, and the liquid hydrogen transfer pump is connected to an external storage device through the first output pipeline; and the first output pipeline is provided with a second valve.

The large-scale ceiling structured low-pressure liquid hydrogen concrete storage tank, preferably, further comprises a hydrogen boil off gas (BOG) treatment system for removing excess hydrogen boil off gas; the hydrogen BOG treatment system includes a second output pipeline; the internal cavity of the storage tank body is connected to an external hydrogen collection device through the second output pipeline.

The large-scale ceiling structured low-pressure liquid hydrogen concrete storage tank, preferably, further comprises an overpressure protection system for applying pressure control protection onto the storage tank in a case that the storage tank is overpressured; the overpressure protection system includes a third output pipeline and a pressure safety valve; the internal cavity of the storage tank body is connected to an external recovery pipe through the third output pipeline; the pressure safety valve is arranged on the third output pipeline.

The large-scale ceiling structured low-pressure liquid hydrogen concrete storage tank, preferably, further comprises a vacuum protection system for applying pressure control protection onto the storage tank in a case that the storage tank is under a negative pressure; the vacuum protection system includes an input pipeline and a vacuum safety valve; inert gas H₂ or Hₑ is connected to the cavity of the storage tank body through the input pipeline; the vacuum safety valve is arranged on the input pipeline.

The present disclosure has the following advantages by taking the above technical solutions:
(1) In the aspect of storage pressure, compared with a conventional cryogenic hydrocarbon large-scale prestressed concrete storage tank, a storage pressure of the present disclosure has been greatly improved. The conventional storage tank is generally designed with a lower pressure, less than 29KPa (G), and only its outer tank wall is provided with prestressed steel bars; a pressure of the storage tank of the present disclosure is 0.6MPa (G), so the storage pressure is larger.
(2) In the aspect of prestressed concrete design, compared with the conventional cryogenic hydrocarbon large-scale prestressed concrete storage tank, the prestressed concrete design of the present disclosure presents a prominent proportion. The conventional storage tank has prestressed steel bars arranged in the outer tank wall only, while the storage tank of the present disclosure have prestressed steel bars arranged in the bottom cushion cap, the outer tank wall and the top concrete dome, respectively. Further, the thickness of the bottom of the outer tank is strengthened at connection between the bottom pile cap and the outer tank wall, and the thickness of the upper part of the outer tank is strengthened at connection between the outer tank wall and the dome, so that a relatively high operating pressure of the tank structure can be achieved.
(3) In the aspect of storage volume of the storage tank, an effective volume of the present disclosure can reach a maximum of 270,000 cubic meters, breaking through a limitation of storage tank capacity. Compared with a spherical tank type of conventional cryogenic hydrocarbons, the present disclosure breaks through bottom support stress design, transportation, efficient utilization of plate material, installation and welding, and the problem of the difficulty of choosing a spherical tank type for storage tanks that have the larger volumes, thereby addressing the problem of storing liquid hydrocarbon on a large volume;
(4) In the aspect of concrete strength, storage of the present disclosure can reach a maximum design pressure of 0.6MPa (G), which is basically the tensile strength limit of high-strength concrete (concrete generally is compressive but not tensile), thereby making full use of the tensile limit of concrete.

### BRIEF DESCRIPTION OF THE DRAWINGS

Various other advantages and benefits will become apparent to those of ordinary skill in the art upon reading the detailed description of the following preferred embodiments. The drawings are used for the purpose of illustrating preferred embodiments only and should not to be considered as limitation to the present disclosure. The same reference numbers are used to refer to the same parts throughout the drawings. In the attached figures:
Fig. 1 is a schematic diagram of a sectional structure of the present disclosure;
Fig. 2 is a schematic diagram of a top view structure of the present disclosure;
Fig. 3 is a partial enlarged schematic diagram of connection between pile foundation and a storage tank body of the present disclosure;
Fig. 4 is a partial enlarged schematic diagram of connection among a metal ceiling, a prestressed concrete dome and a storage tank body of the present disclosure; and
Fig. 5 is a schematic diagram of a structure of a corrugated structure ceiling of the present disclosure.

The reference numbers in the figures are:
1- pile foundation; 2- prestressed concrete outer tank; 3- inner tank; 4- elastic felt layer; 5- perlite layer; 6- tank bottom cold insulation layer; 7- metal ceiling; 8- ceiling glass wool insulation layer; 9 - prestressed concrete dome; 10- dome liner; 11- perlite baffle; 12- ceiling vent; 13- corrugated structure ceiling; 14- perlite filling port; 15-feeding system; 16- outward pumping system 17- hydrogen BOG treatment system; 18- overpressure protection system; 19- vacuum protection system.

### DETAILED DESCRIPTION OF THE EMBODIMENTS

Exemplary embodiments of the present disclosure will be described in more detail below with reference to the accompanying drawings. While the exemplary embodiments of the present disclosure are illustrated in the drawings, it should be understood that the present disclosure may be embodied in various forms and should not be limited by the embodiments set forth herein. Rather, these embodiments are provided so that the present disclosure will be understood more thoroughly and the scope of the present disclosure can be fully conveyed to those skilled in the art.

The present disclosure provides a large-scale ceiling structured low-pressure liquid hydrogen concrete storage tank, which can solve the problem of cryogenically storing liquid hydrogen on large scale through cooperative connection among pile foundation, a glass brick layer or a PUF layer, a storage tank body, a metal ceiling and a prestressed concrete dome, and can ensure safe and smooth operation of liquid hydrogen cryogenic storage equipment by means of an airtight system of the equipment.

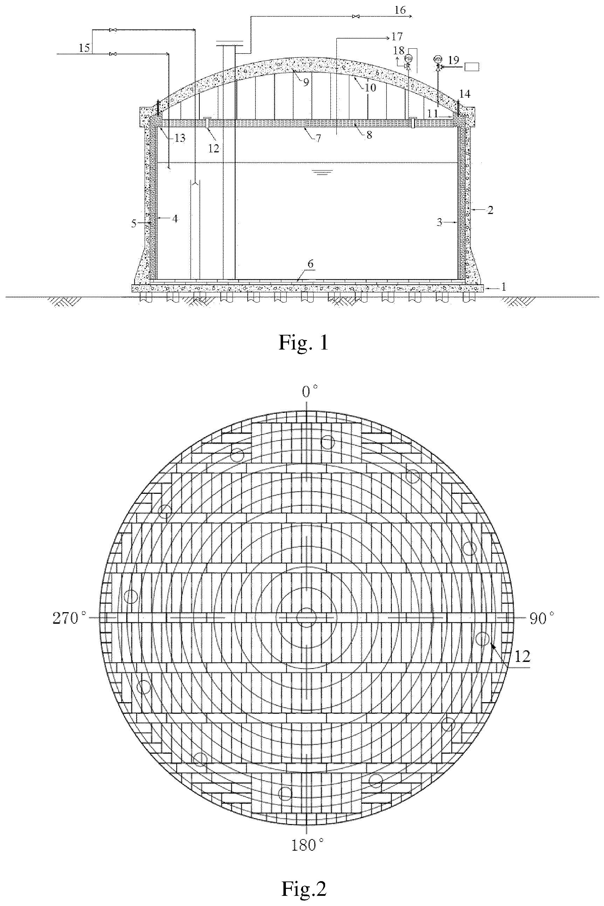

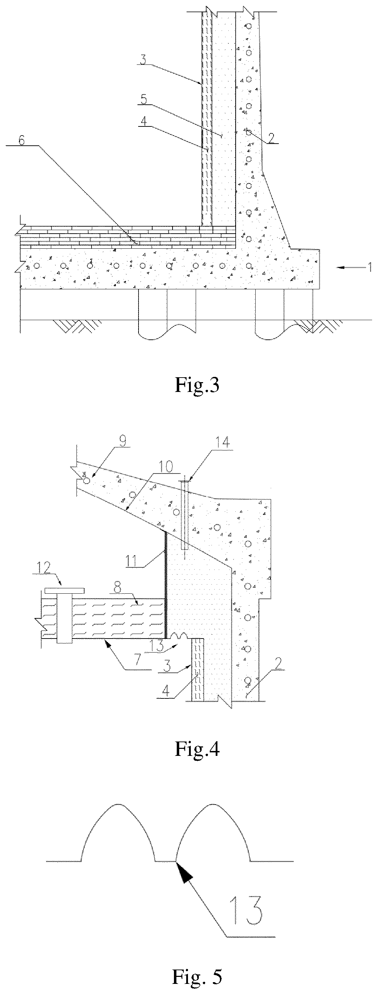

As shown in Figs. 1 and 3, the large-scale ceiling structured low-pressure liquid hydrogen concrete storage tank provided by the present disclosure includes: pile foundation 1 fixed to the ground, wherein a cushion cap is provided at an upper part of the pile foundation 1; an tank bottom cold insulation layer 6 provided at a top of the cushion cap in a stacked manner, wherein the tank bottom cold insulation layer 6 may be a glass brick layer or a PUF (polyurethane) layer; a storage tank body with its bottom fixed to the tank bottom cold insulation layer 6, wherein inside of the storage tank body there is a cavity for storing liquid hydrogen, and the storage tank body includes a prestressed concrete outer tank 2, a perlite layer 5, an elastic felt layer 4 and an inner tank 3 which are arranged in turn from outside to inside; a metal ceiling 7 provided at a top of the storage tank body, wherein an outer edge of the metal ceiling is connected to the perlite layer 5 of the storage tank body; a prestressed concrete dome 9 provided at a top of the metal ceiling 7, wherein an outer edge of the dome is fixed to a top of the prestressed concrete outer tank 2 of the storage tank body; and the pile foundation 1, the prestressed concrete outer tank 2 of the storage tank body, and the prestressed concrete dome 9 each are prefabricated prestressed steel bars inside.

In the above embodiment, as shown in Figs. 4 and 5, a corrugated structure ceiling 13 is provided between the edge of the metal ceiling 7 and the perlite layer 5, and perlite is filled on the corrugated structure. Therefore, it is possible to prevent the ceiling from shrinking and deforming under the action of temperature difference as the corrugated structure can be effectively stretched to prevent the ceiling structure from shrinking.

In the above embodiment, preferably, as shown in Fig. 4, a perlite baffle 11 is provided at connection between the metal ceiling 7 and the perlite layer 5. In this case, the perlite baffle may be made of stainless steel wire mesh together with fiber cloth, thereby preventing perlite from entering a space of the ceiling during filling of the perlite.

In the above embodiment, preferably, a ceiling glass wool insulation layer 8 is provided at an upper part of the metal ceiling 7, which can play a role of heat preservation to prevent the space of the ceiling from being cooled. A ceiling vent 12 (see Fig. 2) is provided on the metal ceiling 7 so that a force generated by pressure difference between upper and lower spaces of the metal ceiling 7 does not exceed a weight of the ceiling, and is configured to maintain balance of air pressure between the inner of the tank and the upper part over the tank during operation of the storage tank in order to prevent the ceiling from being lifted.

In the above embodiment, preferably, a dome lining plate 10 is provided at a bottom of the prestressed concrete dome 9. The dome lining plate 10 is made of material such as austenitic stainless steel (304/304L/316/316L, etc.) with a thickness of 0.006m. Support comes from a top beam frame which is used as a bottom mold when the prestressed concrete dome is concreted. The prestressed concrete dome is provided on one side with a perlite filling port 14, which penetrates the prestressed concrete dome 9 and then extends into an upper part of an annular space of the perlite layer 5 of the storage tank body. The perlite filling port 14 is used for filling perlite in the storage tank and also for subsequent filling in the case that the perlite subsides.

In the above embodiment, preferably, the present disclosure further includes a feeding system 15 for feeding the storage tank body. The feeding system includes a feeding pipe, a first feeding pipeline and a second feeding pipeline. The feeding pipe is arranged inside the storage tank body, and a bottom of the feeding pipe is fixed to a bottom of the inner tank. Raw material is communicated to the feeding pipe through the first feeding pipeline; raw material is communicated to the internal cavity of the storage tank body through the second feeding pipeline. The first feed pipeline and the second feeding pipeline are provided with first valves, respectively.

It should be noted that in case that there is a possible situation of stratification, for example, when the density of liquid hydrogen in an incoming ship is greater than the density of liquid hydrogen stored in the tank, material feeding is performed from the top, i.e., feeding via the second feeding pipeline; and when the density of liquid hydrogen in the incoming ship is lower than the density of the liquid hydrogen stored in the tank, material feeding is performed from the bottom, i.e., feeding through the first feeding pipeline. This feeding mode is mainly adopted in order to prevent stratification inside the storage tank, in which the unloaded liquid hydrogen is fully mixed with the liquid hydrogen inside the storage tank by controlling a feeding position.

In the above embodiment, preferably, the present disclosure further includes an outward pumping system 16 for transporting the internal liquid hydrogen to the outside of the storage tank body. The outward pumping system includes a pump well, a liquid hydrogen transfer pump and a first output pipeline. The pump well is arranged within the storage tank body, the liquid hydrogen transfer pump is arranged within the pump well, and the liquid hydrogen transfer pump is connected to an external storage device through the first output pipeline. The first output pipeline is provided with a second valve thereon.

In this case, it should be noted that the transfer pump is a submersible centrifugal pump, which is installed in the pump well together with an electric motor. A flow control valve is installed on the outlet pipeline of each pump, which functions to regulate outlet flows of respective running pumps to make them operate at the same flow. Moreover, the flow control valve can cut off the output in case of emergency.

In the above embodiment, preferably, the present disclosure further includes a hydrogen BOG treatment system 17 for removing excess hydrogen boil off gas (BOG). The hydrogen BOG treatment system includes a second output pipeline. The internal cavity of the storage tank body is connected to an external hydrogen collection device through the second output pipeline.

It should be noted that production of boil off gas in the liquid hydrogen storage tank is mainly resulted from ortho-para hydrogen conversion as well as input of external energy, for example, pump operation, introduction of external heat, variation of atmospheric pressure, environmental influence, changes of volume of the liquid hydrogen inside the tank caused by liquid hydrogen feeding, and the like.

In the above embodiment, preferably, the present disclosure further includes an overpressure protection system 18 for applying pressure control protection onto the storage tank in the case that the storage tank is overpressured. The overpressure protection system includes a third output pipeline and a pressure safety valve. The internal cavity of the storage tank body is connected to an external recovery pipe through the third output pipeline. The pressure safety valve is arranged on the third output pipeline.

It should be noted that a normal operating pressure of the storage tank is generally less than 0.6 MPa (G). Considering the H₂ safety requirements, the storage tank usually maintains the normal operating pressure of the storage tank by means of a BOG compressor and through gas/liquid supply and outward transmission. If the pressure of the storage tank rises above the normal maximum operating pressure, the gas in the storage tank will be released to the flare of the storage tank; and if the pressure of the storage tank still keeps rising, an emergency pressure release system of the storage tank will have a final protective effect, namely the H₂ BOG will be discharged into the recovery pipe by the pressure relief valve, and an independent pipeline system is provided in a receiving station to collect the overpressured H₂.

In the above embodiment, preferably, the present disclosure further includes a vacuum protection system 19 for applying pressure control protection onto the storage tank in the case that the storage tank is under a negative pressure. The vacuum protection system includes an input pipeline and a vacuum safety valve. Inert gas H₂ or Hₑ is connected to the cavity of the storage tank body through the input pipeline. The vacuum safety valve is arranged on the input pipeline.

It should be noted, the normal operating pressure of the storage tank can be maintained by supply of H₂/Hₑ inert gas. If the pressure of the tank drops, the BOG compressor stops running, and discharging from the tank is stopped. In addition, a gas supply device for maintaining the internal pressure can also be used, but if it still cannot meet the requirement, the vacuum safety valve of the storage tank should be able to turn on in time and replenish the inert gas into the storage tank. The vacuum safety valve is connected to the special pipeline system in the receiving station for replenishing the gas to maintain the internal pressure.

In addition, it should be noted that a cold insulation structure of the storage tank of the present disclosure includes a three-part structure including tank bottom cold insulation, tank wall cold insulation, and ceiling cold insulation, wherein the tank bottom cold insulation adopts the form of glass bricks or a PUF layer for cold insulation, and the glass bricks and the PUF should be able to bear the load of the inner tank and the liquid in the tank so as to ensure that the strength of the materials meets the requirements; the tank wall cold insulation is in the form of a combination of elastic felt and perlite, wherein the elastic felt is arranged outside the inner tank, and the perlite is arranged outside the elastic felt and extends to an outer tank wall plate or outer tank lining plate; and the ceiling cold insulation adopts the form of glass wool, which is directly laid above a ceiling plate.

Finally, it should be noted that the above embodiments are intent to provide illustration only for the technical solutions of the present disclosure, instead of limitation thereto. Although the present disclosure has been described in detail with reference to the above embodiments, it should be understand by those of ordinary skill in the art that modifications still can be made to the technical solutions described in the various foregoing embodiments, or equivalent replacements can still be made to some technical features thereof; and that the essence of the technical solutions related to these modifications or replacements do not deviate from the spirit and scope of the technical solutions of the embodiments of the present disclosure.

## Claims

1. A large-scale ceiling structured low-pressure liquid hydrogen concrete storage tank, comprising:
pile foundation (1) fixed to the ground, wherein a cushion cap is provided at an upper part of the pile foundation (1);
a tank bottom cold insulation layer (6) provided at a top of the cushion cap in a stacked manner;
a storage tank body with a bottom thereof fixed to the tank bottom cold insulation layer (6), wherein inside of the storage tank body there is a cavity for storing liquid hydrogen, and the storage tank body includes a prestressed concrete outer tank (2), a perlite layer, an elastic felt layer (4), and an inner tank (3) which are arranged in turn from outside to inside;
a metal ceiling (7) provided at a top of the storage tank body, wherein an outer edge of the metal ceiling (7) is connected to the perlite layer (5)of the storage tank body; and
a prestressed concrete dome (9) provided at a top of the metal ceiling (7),
wherein an outer edge of the dome is fixed to a top of the prestressed concrete outer tank (2) of the storage tank body;
wherein the pile foundation (1), the prestressed concrete outer tank (2) of the storage tank body, and the prestressed concrete dome (9) each are prefabricated and comprise prestressed steel bars,
**characterised in that**
a stretchable corrugated structure ceiling (13) is provided between the edge of the metal ceiling (7) and the perlite layer (5), and part of perlite is filled on the stretchable corrugated structure ceiling (13) and provided within an annular space of the perlite layer (5) as a part of the perlite layer.

2. The large-scale ceiling structured low-pressure liquid hydrogen concrete storage tank according to claim 1, wherein a perlite baffle (11) is provided at connection between the metal ceiling (7) and the perlite layer.

3. The large-scale ceiling structured low-pressure liquid hydrogen concrete storage tank according to claim 1, wherein a ceiling glass wool insulation layer (8) is provided at an upper part of the metal ceiling (7);
the metal ceiling (7) is provided with a ceiling vent (12).

4. The large-scale ceiling structured low-pressure liquid hydrogen concrete storage tank according to claim 1, wherein a dome lining plate (10) is provided at a bottom of the prestressed concrete dome (9);
the prestressed concrete dome (9) is provided on one side with a perlite filling port (14), which penetrates the prestressed concrete dome (9) and then extends into an upper part of an annular space of the perlite layer (5)of the storage tank body.

5. The large-scale ceiling structured low-pressure liquid hydrogen concrete storage tank according to claim 1, further comprising a feeding system (15) for feeding the storage tank body;
the feeding system (15) includes a feeding pipe, a first feeding pipeline and a second feeding pipeline;
the feeding pipe is arranged inside the storage tank body, and a bottom of the feeding pipe is fixed to a bottom of the inner tank (3);
raw material is communicated to the feeding pipe through the first feeding pipeline;
raw material is communicated to the internal cavity of the storage tank body through the second feeding pipeline; and
the first feed pipeline and the second feeding pipeline are provided with first valves, respectively.

6. The large-scale ceiling structured low-pressure liquid hydrogen concrete storage tank according to claim 1, further comprising an outward pumping system (16) for transporting internal liquid hydrogen to outside of the storage tank body;
the outward pumping system (16) includes a pump well, a liquid hydrogen transfer pump and a first output pipeline;
the pump well is arranged within the storage tank body, the liquid hydrogen transfer pump is arranged within the pump well, the liquid hydrogen transfer pump is connected to an external storage device through the first output pipeline, and the first output pipeline is provided with a second valve.

7. The large-scale ceiling structured low-pressure liquid hydrogen concrete storage tank according to claim 1, further comprising a hydrogen boil off gas, BOG, treatment system (17) for removing excess hydrogen boil off gas;
the hydrogen BOG treatment system (17) includes a second output pipeline;
the internal cavity of the storage tank body is connected to an external hydrogen collection device through the second output pipeline.

8. The large-scale ceiling structured low-pressure liquid hydrogen concrete storage tank according to claim 1, further comprising an overpressure protection system (18) for applying pressure control protection onto the storage tank in a case that the storage tank is overpressured;
the overpressure protection system (18) includes a third output pipeline and a pressure safety valve;
the internal cavity of the storage tank body is connected to an external recovery pipe through the third output pipeline;
the pressure safety valve is arranged on the third output pipeline.

9. The large-scale ceiling structured low-pressure liquid hydrogen concrete storage tank according to claim 1, further comprising a vacuum protection system (19) for applying pressure control protection onto the storage tank in a case that the storage tank is under a negative pressure;
the vacuum protection system (19) includes an input pipeline and a vacuum safety valve;
inert gas H₂ or Hₑ is connected to the cavity of the storage tank body through the input pipeline;
the vacuum safety valve is arranged on the input pipeline.

## Patentansprüche

1. Deckenstrukturierter Niederdruck-Flüssigwasserstoff-Großraumspeichertank aus Beton, umfassend:
ein am Boden befestigtes Pfahlfundament (1), wobei eine Prellkappe an einem oberen Teil des Pfahlfundaments (1) bereitgestellt ist;
eine Tankboden-Kälteisolationsschicht (6), die in einer gestapelten Weise an einer Oberseite der Prellkappe bereitgestellt ist;
einen Speichertankkörper, dessen Boden an der Tankboden-Kälteisolationsschicht (6) befestigt ist, wobei sich im Inneren des Speichertankkörpers ein Hohlraum zum Speichern von flüssigem Wasserstoff befindet und der Speichertankkörper einen Spannbeton-Außentank (2), eine Perlit-Schicht, eine elastische Filzschicht (4) und einen Innentank (3), die nacheinander von außen nach innen angeordnet sind, aufweist;
eine Metalldecke (7), die an einer Oberseite des Speichertankkörpers bereitgestellt ist, wobei ein äußerer Rand der Metalldecke (7) mit der Perlit-Schicht (5) des Speichertankkörpers verbunden ist; und
eine Spannbetonkuppel (9), die an einer Oberseite der Metalldecke (7) bereitgestellt ist, wobei ein äußerer Rand der Kuppel an einer Oberseite des Spannbeton-Außentanks (2) des Speichertanks befestigt ist;
wobei das Pfahlfundament (1), der Spannbeton-Außentank (2) des Speichertankkörpers und die Spannbetonkuppel (9) jeweils vorgefertigt sind und Spannstahlbewehrungsstäbe umfassen,
**dadurch gekennzeichnet, dass**
eine streckbare Wellstrukturdecke (13) zwischen dem Rand der Metalldecke (7) und der Perlit-Schicht (5) bereitgestellt ist und ein Teil des Perlits auf die streckbare Wellstrukturdecke (13) gefüllt und innerhalb eines ringförmigen Raums der Perlit-Schicht (5) als ein Teil der Perlit-Schicht bereitgestellt ist.

2. Deckenstrukturierter Niederdruck-Flüssigwasserstoff-Großraumspeichertank aus Beton nach Anspruch 1, wobei eine Perlit-Prallplatte (11) an einer Verbindung zwischen der Metalldecke (7) und der Perlit-Schicht bereitgestellt ist.

3. Deckenstrukturierter Niederdruck-Flüssigwasserstoff-Großraumspeichertank aus Beton nach Anspruch 1, wobei eine Decken-Glaswolle-Isolierschicht (8) an einem oberen Teil der Metalldecke (7) bereitgestellt ist;
wobei die Metalldecke (7) mit einer Deckenentlüftung (12) versehen ist.

4. Deckenstrukturierter Niederdruck-Flüssigwasserstoff-Großraumspeichertank aus Beton nach Anspruch 1, wobei eine Kuppelauskleidungsplatte (10) an einer Unterseite der Spannbetonkuppel (9) bereitgestellt ist;
wobei die Spannbetonkuppel (9) auf einer Seite mit einem Perlit-Einfüllport (14) versehen ist, der sich durch die Spannbetonkuppel (9) hindurch erstreckt und sich dann in einen oberen Teil eines ringförmigen Raums der Perlit-Schicht (5) des Speichertankkörpers erstreckt.

5. Deckenstrukturierter Niederdruck-Flüssigwasserstoff-Großraumspeichertank aus Beton nach Anspruch 1, des Weiteren umfassend ein Befüllungssystem (15) zum Befüllen des Speichertankkörpers;
wobei das Befüllungssystem (15) ein Befüllungsrohr, eine erste Befüllungsleitung und eine zweite Befüllungsleitung umfasst;
wobei das Befüllungsrohr im Inneren des Speichertankkörpers angeordnet ist, und eine Unterseite des Befüllungsrohrs an einem Boden des Innentanks (3) befestigt ist;
wobei Ausgangsmaterial über die erste Befüllungsleitung zu dem Befüllungsrohr übertragen wird;
wobei Ausgangsmaterial über die zweite Befüllungsleitung in den inneren Hohlraum des Speichertankkörpers übertragen wird; und
wobei die erste Befüllungsleitung und die zweite Befüllungsleitung jeweils mit ersten Ventilen ausgestattet sind.

6. Deckenstrukturierter Niederdruck-Flüssigwasserstoff-Großraumspeichertank aus Beton nach Anspruch 1, des Weiteren umfassend ein Auswärtspumpsystem (16) zum Transportieren von internem flüssigem Wasserstoff nach außerhalb des Speichertankkörpers;
wobei das Auswärtspumpsystem (16) einen Pumpenschacht, eine Flüssigwasserstoff-Förderpumpe und eine erste Austragsleitung aufweist;
wobei der Pumpenschacht innerhalb des Speichertankkörpers angeordnet ist, die Flüssigwasserstoff-Förderpumpe innerhalb des Pumpenschachts angeordnet ist, die Flüssigwasserstoff-Förderpumpe über die erste Austragsleitung mit einer externen Speichervorrichtung verbunden ist, und die erste Austragsleitung mit einem zweiten Ventil ausgestattet ist.

7. Deckenstrukturierter Niederdruck-Flüssigwasserstoff-Großraumspeichertank aus Beton nach Anspruch 1, des Weiteren umfassend ein Wasserstoff-Boil-off-Gas-Behandlungssystem, BOG-Behandlungssystem, (17) zum Abziehen von überschüssigem Wasserstoff-Boil-off-Gas;
wobei das Wasserstoff-BOG-Behandlungssystem (17) eine zweite Austragsleitung aufweist;
wobei der innere Hohlraum des Speichertankkörpers über die zweite Austragsleitung mit einer externen Wasserstoffsammelvorrichtung verbunden ist.

8. Deckenstrukturierter Niederdruck-Flüssigwasserstoff-Großraumspeichertank aus Beton nach Anspruch 1, des Weiteren umfassend ein Überdruckschutzsystem (18) zum Anwenden eines Drucksteuerungsschutzes auf den Speichertank in einem Fall, dass der Speichertank einen Überdruck aufweist;
wobei das Überdruckschutzsystem (18) eine dritte Austragsleitung und ein Drucksicherheitsventil aufweist;
wobei der innere Hohlraum des Speichertankkörpers über die dritte Austragsleitung mit einer externen Rückgewinnungsleitung verbunden ist;
wobei das Drucksicherheitsventil an der dritten Austragsleitung angeordnet ist.

9. Deckenstrukturierter Niederdruck-Flüssigwasserstoff-Großraumspeichertank aus Beton nach Anspruch 1, des Weiteren umfassend ein Vakuumschutzsystem (19) zum Anwenden eines Drucksteuerungsschutzes auf den Speichertank in einem Fall, dass der Speichertank einen Unterdruck aufweist;
wobei das Vakuumschutzsystem (19) eine Eingangsleitung und ein Vakuumsicherheitsventil aufweist;
wobei Inertgas H₂ oder Hₑ über die Eingangsleitung mit dem Hohlraum des Speichertankkörpers verbunden ist;
wobei das Vakuumsicherheitsventil an der Eingangsleitung angeordnet ist.

## Revendications

1. Réservoir en béton à structure plafonnière pour le stockage d'hydrogène liquide à basse pression à grande échelle, comprenant :
une fondation sur pieux (1) fixée au sol, dans lequel une semelle d'amortissement est agencée sur une partie supérieure de la fondation sur pieux (1) ;
une couche d'isolation de bas de réservoir contre le froid (6) agencée sur un dessus de la semelle d'amortissement de manière empilée ;
un corps de réservoir de stockage avec un bas de celui-ci fixé à la couche d'isolation de bas de réservoir contre le froid (6), dans lequel il existe une cavité pour stocker de l'hydrogène liquide à l'intérieur du corps de réservoir de stockage, et le corps de réservoir de stockage inclut un réservoir extérieur en béton précontraint (2), une couche de perlite, une couche de feutre élastique (4) et un réservoir intérieur (3) disposés en série de l'extérieur vers l'intérieur.
un plafond métallique (7) agencé sur un dessus du corps de réservoir de stockage, dans lequel un bord extérieur du plafond métallique (7) est relié à la couche de perlite (5) du corps de réservoir de stockage ; et
un dôme en béton précontraint (9) agencé sur un dessus du plafond métallique (7), dans lequel un bord extérieur du dôme est fixé à un dessus du réservoir extérieur en béton précontraint (2) du corps du réservoir de stockage ;
dans lequel la fondation sur pieux (1), le réservoir extérieur en béton précontraint (2) du corps de réservoir de stockage et le dôme en béton précontraint (9) sont chacun préfabriqués et comprennent des barres d'acier précontraintes,
**caractérisé en ce qu'**un plafond à structure ondulée étirable (13) est agencé entre le bord du plafond métallique (7) et la couche de perlite (5), et une partie de la perlite est versée sur le plafond à structure ondulée étirable (13) et agencée à l'intérieur d'un espace annulaire de la couche de perlite (5) comme une partie de la couche de perlite.

2. Réservoir en béton à structure plafonnière pour le stockage d'hydrogène liquide à basse pression à grande échelle selon la revendication 1, dans lequel un déflecteur en perlite (11) est agencé au niveau d'une liaison entre le plafond métallique (7) et la couche de perlite.

3. Réservoir en béton à structure plafonnière pour le stockage d'hydrogène liquide à basse pression à grande échelle selon la revendication 1, dans lequel une couche d'isolation de plafond en laine de verre (8) est agencée sur une partie supérieure du plafond métallique (7) ;
le plafond métallique (7) est pourvu d'un évent de plafond (12).

4. Réservoir en béton à structure plafonnière pour le stockage d'hydrogène liquide à basse pression à grande échelle selon la revendication 1, dans lequel une plaque de chemisage de dôme (10) est agencée sur un dessous du dôme en béton précontraint (9) ;
le dôme en béton précontraint (9) est pourvu d'un côté d'un orifice de remplissage de perlite (14) qui pénètre dans le dôme en béton précontraint (9) et s'étend ensuite dans une partie supérieure d'un espace annulaire de la couche de perlite (5) du corps de réservoir de stockage.

5. Réservoir en béton à structure plafonnière pour le stockage d'hydrogène liquide à basse pression à grande échelle selon la revendication 1, comprenant en outre un système d'alimentation (15) pour alimenter le corps de réservoir de stockage ;
le système d'alimentation (15) inclut un tuyau d'alimentation, une première tuyauterie d'alimentation et une seconde tuyauterie d'alimentation ;
le tuyau d'alimentation est disposé à l'intérieur du corps de réservoir de stockage, et un fond du tuyau d'alimentation est fixé à un bas du réservoir intérieur (3) ;
de la matière première est transférée au tuyau d'alimentation via la première tuyauterie d'alimentation ;
de la matière première est transférée dans la cavité interne du corps de réservoir de stockage via la seconde tuyauterie d'alimentation ; et
la première tuyauterie d'alimentation et la seconde tuyauterie d'alimentation sont pourvues de premières vannes, respectivement.

6. Réservoir en béton à structure plafonnière pour le stockage d'hydrogène liquide à basse pression à grande échelle selon la revendication 1, comprenant en outre un système de pompage vers l'extérieur (16) pour transporter de l'hydrogène liquide interne vers l'extérieur du corps de réservoir de stockage ;
le système de pompage vers l'extérieur (16) inclut un puits de pompage, une pompe de refoulement d'hydrogène liquide et une première tuyauterie de sortie ;
le puits de pompage est disposé à l'intérieur du corps de réservoir de stockage, la pompe de refoulement d'hydrogène liquide est disposée à l'intérieur du puits de pompage, la pompe de refoulement d'hydrogène liquide est raccordée à un dispositif de stockage externe par l'intermédiaire de la première tuyauterie de sortie, et la première tuyauterie de sortie est pourvue d'une seconde vanne.

7. Réservoir en béton à structure plafonnière pour le stockage d'hydrogène liquide à basse pression à grande échelle selon la revendication 1, comprenant en outre un système de traitement d'hydrogène gazeux évaporé, BOG, pour éliminer l'excès d'hydrogène gazeux évaporé ;
le système de traitement d'hydrogène BOG (17) inclut une seconde tuyauterie de sortie ;
la cavité interne du corps de réservoir de stockage est reliée à un dispositif externe de collecte d'hydrogène par l'intermédiaire de la seconde tuyauterie de sortie.

8. Réservoir en béton à structure plafonnière pour le stockage d'hydrogène liquide à basse pression à grande échelle selon la revendication 1, comprenant en outre un système de protection contre les surpressions (18) pour appliquer une protection de commande de pression sur le réservoir de stockage dans un cas où le réservoir de stockage est surcomprimé ;
le système de protection contre les surpressions (18) inclut une troisième tuyauterie de sortie et une soupape de sûreté de pression ;
la cavité interne du corps du réservoir de stockage est reliée à un tuyau de récupération externe par l'intermédiaire de la troisième tuyauterie de sortie ;
la soupape de sûreté de pression est disposée sur la troisième tuyauterie de sortie.

9. Réservoir en béton à structure plafonnière pour le stockage d'hydrogène liquide à basse pression à grande échelle selon la revendication 1, comprenant en outre un système de protection contre le vide (19) pour appliquer une protection de commande de pression sur le réservoir de stockage dans un cas où le réservoir de stockage est sous une pression négative ;
le système de protection contre le vide (19) inclut une tuyauterie d'entrée et une soupape de sécurité à vide ;
du gaz inerte H₂ ou Hₑ est relié à la cavité du corps du réservoir de stockage par l'intermédiaire de la tuyauterie d'entrée ;
la soupape de sécurité à vide est disposée sur la tuyauterie d'entrée.
